# FASCICULE DE BREVET EUROPEEN

(11) **EP 1 234 752 B1**
(45) Date de publication et mention de la délivrance du brevet: **09.06.2004**
(21) Numéro de dépôt: 02290471.8
(22) Date de dépôt: 26.02.2002
(51) Int. Cl.: B62D 25/10, B60Q 1/30

(54) **Encadrement de vitre d'habitacle de véhicule automobile et ouvrant comportant un tel encadrement**
Kraftfahrzeug-Glasscheibe mit umgebender Profilleiste, und Fahrzeugflügel mit derartiger Glasscheibe
Vehicle window pane surrounded by a frame, and opening body element equipped with such a window pane

(30) Priorité: 26.02.2001 FR 0102597
(43) Date de publication de la demande: 28.08.2002
(73) Titulaire: COMPAGNIE PLASTIC OMNIUM, 69007 Lyon (FR)
(72) Inventeur: Pommeret, Maelig, 01100 Oyonnax (FR); Ader, Stéphanie, 01130 Nantua (FR)
(74) Mandataire: de la Bigne, Guillaume Michel Marie

(56) Documents cités:
- EP-A- 0 995 668
- DE-A- 3 245 710
- DE-A- 4 427 402
- DE-A- 19 706 043
- DE-U- 29 620 774
- FR-A- 2 715 908

## Description

La présente invention concerne un encadrement de vitre d'habitacle de véhicule automobile et un ouvrant de véhicule automobile comportant un tel encadrement.

Il est connu de réaliser des feux arrière de véhicules automobiles, notamment des feux de stop, en les intégrant dans des déflecteurs d'air, également désignés becquets, qui sont placés dans le prolongement du toit ou de la malle.

Ces déflecteurs constituent alors simultanément des boîtiers pour les feux, ce qui évite de prévoir des boîtiers de feux séparés.

Une des difficultés qui se posent avec de telles pièces, remplissant à la fois la fonction de déflecteur et la celle de boîtier de feux, est qu'elles doivent présenter une étanchéité parfaite, ce qui alourdit considérablement leur cahier des charges.

Ainsi, l'économie résultant de l'intégration des feux dans le déflecteur est partiellement perdue par l'augmentation de prix de revient du déflecteur étanche.

La présente invention vise à proposer une solution d'intégration de dispositifs optiques sur un véhicule automobile qui ne nécessite aucun accroissement du prix de revient de l'organe recevant ces dispositifs optiques.

La présente invention a pour objet un encadrement de vitre d'habitacle d'un véhicule automobile, comportant une face support comprise entre un bord interne et un bord externe de l'encadrement et destinée à être recouverte par la périphérie d'une vitre reliée de façon étanche audit bord externe (voir DE-A-4 427 402).

Selon l'invention, cet encadrement est caractérisé en ce qu'il comporte, sur sa face support de vitre, un aménagement pour recevoir une source lumineuse.

L'invention objet de la présente demande tire profit de l'existence de la vitre d'habitacle et de son encadrement pour former un dispositif optique dont le boîtier est constitué par l'encadrement et dont le vitrage est constitué par la vitre d'habitacle.

Par rapport aux solutions antérieures consistant à utiliser un déflecteur d'air, l'invention présente l'avantage que le boîtier constitué par l'encadrement est, par nature, un boîtier étanche vis-à-vis de l'extérieur du véhicule.

Dans un mode de réalisation particulier, l'encadrement est muni d'une structure renforcée visant à le rigidifier.

L'encadrement de vitre d'habitacle selon l'invention peut être porté par un ouvrant du véhicule, et notamment un ouvrant arrière ou un hayon, lequel présente l'avantage d'offrir une surface visible en partie haute du véhicule, c'est-à-dire à l'emplacement le plus approprié pour positionner des feux de stop ou des indicateurs directionnels.

Dans un mode de réalisation particulier, l'encadrement comporte un logement (28) ouvert vers l'extérieur du véhicule, c'est-à-dire du côté vitre, et vers l'intérieur du véhicule, ce logement étant aménagé pour recevoir la source lumineuse de manière qu'elle puisse émettre de la lumière hors du logement vers l'extérieur et vers l'intérieur du véhicule.

Dans une variante préférée, le logement est fermé, vers l'intérieur du véhicule, par une paroi translucide ou transparente, éventuellement munie d'un filtre, qui assure la diffusion vers l'intérieur du véhicule de la lumière émise par la source lumineuse.

Cette paroi laisse passer la lumière de la source lumineuse logée dans l'encadrement de sorte que cette source lumineuse peut émettre des rayons lumineux vers l'extérieur du véhicule à travers la vitre d'habitacle et vers l'intérieur du véhicule à travers ladite paroi.

Dans un mode de réalisation particulier, le logement contient un réflecteur mobile pouvant prendre une première position dans laquelle il renvoie les rayons lumineux émis par la source lumineuse vers l'extérieur du véhicule, à travers la vitre, et une seconde position dans laquelle il renvoie les rayons lumineux vers l'intérieur de l'habitacle.

Un encadrement muni d'un tel réflecteur mobile est par exemple utile sur un hayon arrière, pour servir d'optique en position fermée du hayon et d'éclairage de coffre en position ouverte du hayon, le déplacement de réflecteur mobile entre ses deux positions étant provoqué par l'ouverture et la fermeture du hayon.

L'invention a également pour objet un ouvrant de véhicule automobile, notamment un hayon, caractérisé en ce qu'il comporte un encadrement tel que décrit ci-dessus.

Afin de faciliter la compréhension de l'invention, des exemples de réalisation vont maintenant en être décrits, à l'aide des dessins annexés dans lesquels :
- la figure 1 représente, en perspective, un hayon arrière d'un véhicule automobile,
- la figure 2 est une vue rapprochée d'un des montants du hayon du véhicule de la figure 1,
- la figure 3 est une vue rapprochée d'un montant d'un hayon selon un autre mode de réalisation de l'invention,
- la figure 4 est une vue en coupe partielle selon IV-IV du montant de la figure 3,
- la figure 5 est une vue selon V du montant de la figure 3,
- la figure 6 est une vue en coupe partielle analogue à la figure 4 d'un montant de hayon selon un autre mode de réalisation,
- la figure 7 est une vue analogue à la figure 6 représentant le montant dans une autre position.

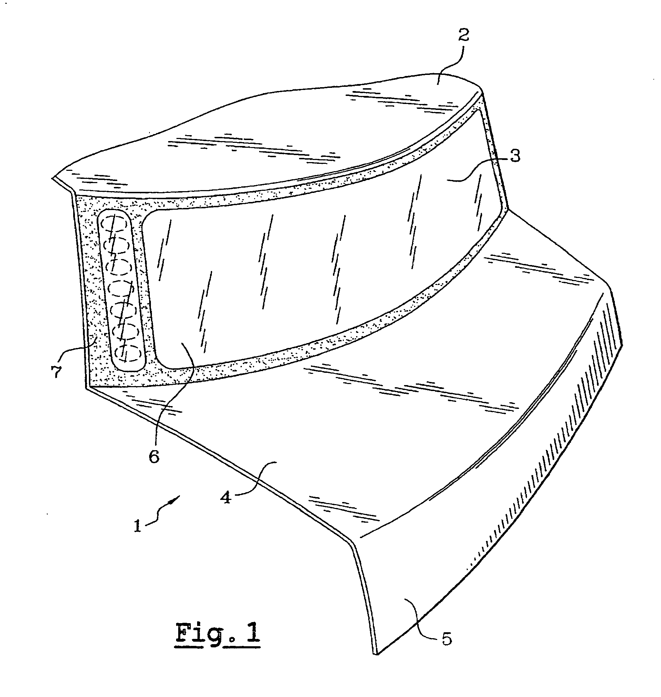

Le hayon arrière 1 du véhicule représenté à la figure 1 comprend une partie supérieure 2, prolongeant le toit (non représenté) du véhicule, une partie verticale vitrée 3, une partie intermédiaire 4 sensiblement horizontale, recouvrant le coffre arrière du véhicule, et une partie terminale 5 sensiblement verticale amorçant la ceinture de caisse arrière du véhicule.

La partie vitrée 3 est constitué par une vitre 6 comportant un encadrement noir 7 réalisé par sérigraphie, pour dissimuler la structure du hayon.

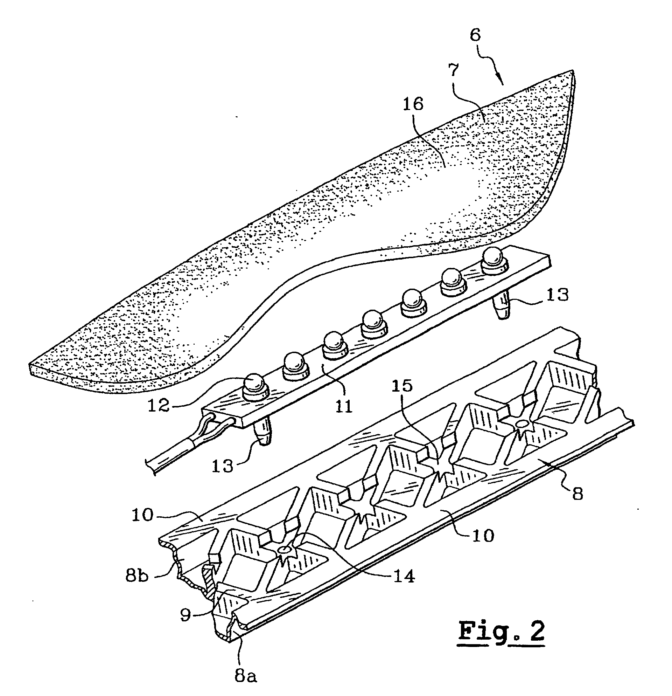

Cette structure est constituée par des montants 8 dont un est visible à la figure 2.

Dans le mode de réalisation de la figure 2, chaque montant 8 constitue une pièce structurelle formant un caisson muni d'un réseau interne de nervures 9. Le caisson comporte un bord interne 8a et un bord externe 8b.

Le caisson s'étend longitudinalement et présente une section en U. Il comporte deux semelles latérales 10 par lesquelles il est collé à la vitre, ce qui assure à la fois le maintien de la vitre et l'étanchéité du caisson vis-à-vis de l'extérieur du véhicule, grâce en particulier à la semelle 10 voisine du bord externe 8b. Les deux semelles coïncident avec la face support du caisson recevant la vitre 6.

Une plaque-support longitudinale 11, réalisée en matière plastique, supporte des diodes électroluminescentes 12. Cette plaque 11 est destinée à se loger dans le caisson pour y positionner les diodes.

A cet effet, la plaque comporte des fixations sous la forme de broches 13 insérables dans des orifices 14 prévus à cet effet dans le caisson, de son côté dirigé vers la vitre.

Le réseau interne de nervures comporte des découpes 15 pour recevoir la plaque-support 11.

La sérigraphie 7 bordant la vitre délimite, de chaque côté de cette dernière, une fenêtre 16 en regard de laquelle débouchent les diodes électroluminescentes portées par la plaque-support.

Compte tenu de la grande longévité supposée des diodes, aucun moyen de démontage n'est prévu dans ce mode de réalisation, la durée de vie du hayon (et donc du véhicule) étant supposée inférieure à celle des diodes.

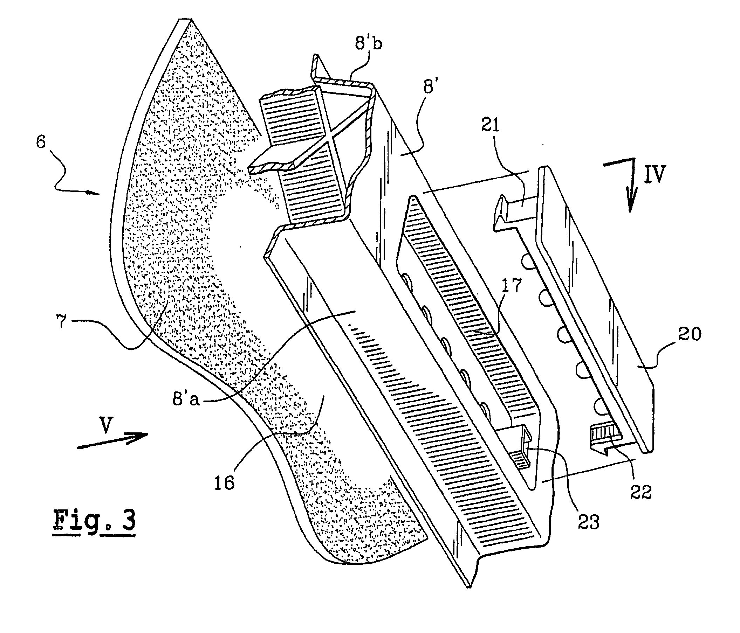

Dans le mode de réalisation des figures 3, 4 et 5, le montant 8' du hayon présente, en dehors des zones prévues pour les sources lumineuses 12, une structure nervurée identique à celle du montant précédemment décrit, avec deux bords interne 8'a et externe 8'b.

En revanche, dans les parties prévues pour les sources lumineuses, le montant comporte un logement 17 accessible depuis l'intérieur du véhicule. Ce logement, de forme sensiblement parallélépipédique, comporte un fond 18 muni d'ouvertures 19 positionnées de manière à coïncider avec les diodes électroluminescentes 12 portées par une plaque-support 20 en forme de couvercle apte à obturer le logement.

La plaque-support 20 comporte des oreilles élastiques ou clips 21 qui assurent son encliquetage dans le logement. Ces oreilles portent des bandes 22 électriquement conductrices servant de connecteurs électriques pour l'alimentation en courant des diodes électroluminescentes, par accouplement avec une base conductrice 23 prévue dans le logement.

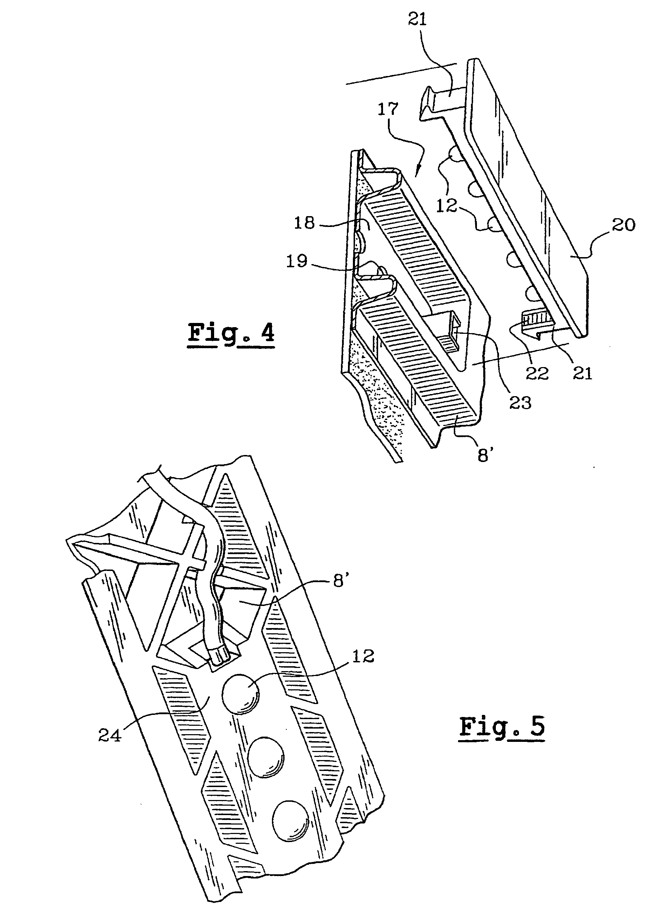

Comme on le voit à la figure 4, le réseau de nervures du montant s'interrompt à l'emplacement du logement recevant les diodes électroluminescentes.

L'avantage de ce mode de réalisation réside dans la possibilité de démonter facilement les diodes électroluminescentes, ce qui, en dépit de la longue durée de vie présumée des diodes, peut s'avérer utile, par exemple pour modifier la puissance des sources lumineuses ou leurs couleurs.

Ainsi que cela est visible sur la figure 5, lorsque le couvercle est convenablement positionné dans le logement, les diodes électroluminescentes affleurent à la face du montant dirigée vers la vitre et se trouvent ainsi à proximité immédiate de la vitre.

La face 23 du montant entourant les diodes est alors visible à travers la vitre et son aspect esthétique peut être amélioré, par exemple par surmoulage d'un film décoratif lors de la réalisation du montant.

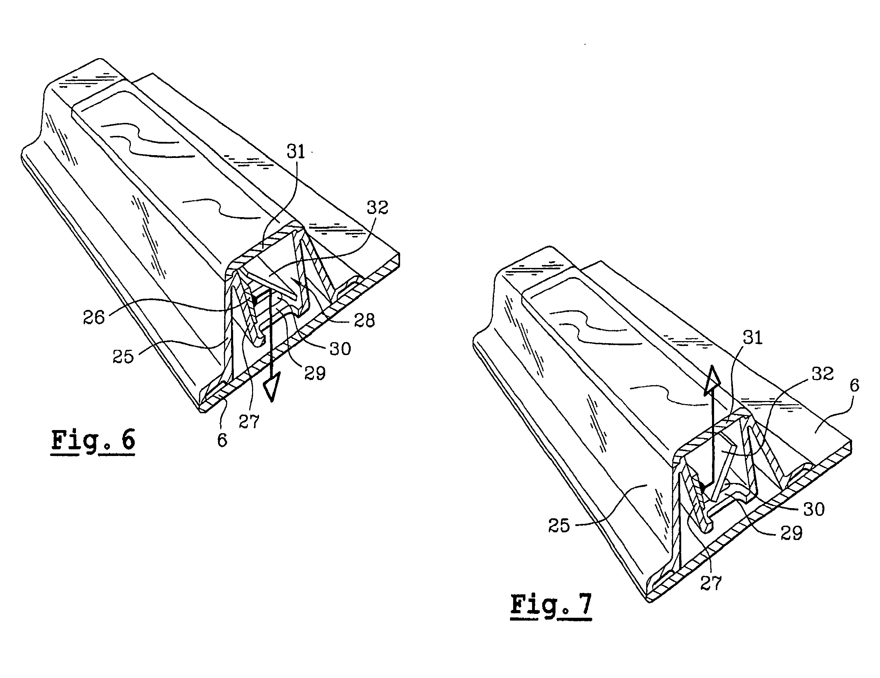

Dans le mode de réalisation des figures 6 et 7, le montant 25 présente une section transversale semblable à celle du montant des figures 3 à 5.

Toutefois, dans ce mode de réalisation, les diodes électroluminescentes 26 sont montées sur l'une 27 des parois latérales du logement 28 prévu pour les sources lumineuses.

Le logement est obturé par un vitrage intérieur 31 qui constitue une paroi transparente ou translucide. Ce vitrage intérieur 31 peut comporter un filtre pour la lumière blanche, afin de diffuser une lumière blanche vers l'intérieur de l'habitacle, même si les diodes émettent de la lumière rouge.

Grâce au vitrage intérieur 31, d'une part, et aux ouvertures 30 prévues dans le fond du logement, d'autre part, la lumière émise par les diodes 26 peut sortir du logement aussi bien vers l'intérieur que vers l'extérieur du véhicule.

Un réflecteur pivotant 32 est disposé en face des diodes dans le logement. Ce réflecteur peut prendre une première position, représentée à la figure 6, dans laquelle il dirige les rayons lumineux issus des diodes 26 vers l'extérieur, à travers les ouvertures 30 ménagées dans le fond 29 du logement, comme indiqué par la flèche sur cette figure.

Le réflecteur pivotant 32 peut également prendre une deuxième position, représentée à la figure 7, dans laquelle il renvoie les rayons lumineux émis par les diodes 26 vers le vitrage intérieur 31, c'est-à-dire vers l'intérieur de l'habitacle, comme indiqué par la flèche sur cette figure.

Le basculement du réflecteur pivotant 32 entre ses deux positions peut-être réalisé par tout moyen approprié, par exemple par un actionneur électrique (non représenté).

Une autre possibilité de déplacement du réflecteur 32 est d'utiliser son poids. Il suffit à cet effet de le fixer sur un axe de pivotement décalé par rapport à son centre de gravité. Ainsi, le réflecteur peut adopter la position de la figure 6 lorsque le hayon est fermé, les diodes servant alors de feux arrières, et la position de la figure 7 lorsque le hayon est ouvert, les diodes servant alors d'éclairage de coffre. L'homme du métier pourra sans difficulté réaliser ce montage.

Les modes de réalisation décrits ci-dessus ne présentent aucun caractère limitatif, l'invention étant définie par les revendications annexées.

En particulier, d'autres sources lumineuses que des diodes électroluminescentes peuvent être envisagées, ainsi que d'autres structures de montants, dès lors que l'encadrement comporte un aménagement pour recevoir une source lumineuse.

## Revendications

1. Encadrement de vitre d'habitacle d'un véhicule automobile, comportant une face support comprise entre un bord interne (8a, 8'a) et un bord externe (8b, 8'b) de l'encadrement et destinée à être recouverte par la périphérie d'une vitre (6) reliée de façon étanche audit bord externe (8b, 8'b), **caractérisé en ce qu'**il comporte, sur sa face support de vitre, un aménagement (15, 17) pour recevoir une source lumineuse.

2. Encadrement selon la revendication 1, **caractérisé en ce qu'**il est muni d'une structure renforcée (9) visant à le rigidifier.

3. Encadrement selon l'une quelconque des revendications 1 et 2, **caractérisé en ce qu'**une plaque-support longitudinale (11,20), destinée à se loger dans le montant, supporte des diodes électroluminescentes (12) constituant la source lumineuse.

4. Encadrement selon la revendication 3, **caractérisé en ce que** le montant est muni d'un réseau interne de nervures (9) qui comporte des découpes pour recevoir la plaque-support.

5. Encadrement selon la revendication 3, **caractérisé en ce que**, dans ses parties prévues pour la source lumineuse (12), le montant comporte un logement (17) accessible depuis l'intérieur du véhicule, ce logement comportant un fond (18) muni d'ouvertures (19) positionnées de manière à coïncider avec les diodes électroluminescentes (12) portées par la plaque-support (20), laquelle est conformée en couvercle apte à obturer le logement (17).

6. Encadrement selon la revendication 5, **caractérisé en ce que** la plaque-support (20) comporte des oreilles élastiques (21) qui assurent son encliquetage dans le logement, ces oreilles servant de connecteurs électriques (22) pour l'alimentation en courant des diodes électroluminescentes, par accouplement avec une base conductrice (23) prévue dans le logement.

7. Encadrement selon l'une quelconque des revendications 1 et 2, **caractérisé en ce qu'**il comporte un logement (28) ouvert vers l'extérieur du véhicule, c'est-à-dire du côté vitre, et vers l'intérieur du véhicule, ce logement (28) étant aménagé pour recevoir la source lumineuse de manière qu'elle puisse émettre de la lumière hors du logement vers l'extérieur et vers l'intérieur du véhicule.

8. Encadrement selon la revendication 7, **caractérisé en ce que** le logement est fermé, vers l'intérieur du véhicule, par une paroi (31) translucide ou transparente, éventuellement munie d'un filtre, qui assure la diffusion vers l'intérieur du véhicule de la lumière émise par la source lumineuse.

9. Encadrement selon l'une quelconque des revendications 7 et 8, **caractérisé en ce que** le logement contient un réflecteur mobile (32) pouvant prendre une première position dans laquelle il renvoie les rayons lumineux émis par la source lumineuse (26) vers l'extérieur du véhicule, à travers la vitre (6), et une seconde position dans laquelle il renvoie les rayons lumineux vers l'intérieur de l'habitacle.

10. Ouvrant de véhicule automobile, **caractérisé en ce qu'**il comporte un encadrement selon l'une quelconque des revendications 1 à 9.

11. Hayon arrière de véhicule automobile **caractérisé en ce qu'**il comporte un encadrement selon la revendication 9, le réflecteur (32) prenant sa première position lorsque le hayon est fermé et sa seconde position lorsque le hayon est ouvert, le déplacement du réflecteur mobile entre ses deux positions étant provoqué par l'ouverture et la fermeture du hayon.

## Patentansprüche

1. Fensterhalterungsteil eines Karosseriegehäuses eines Kraftfahrzeugs, umfassend eine Stützfläche zwischen einem inneren Rand (8a, 8'a) und einem äußeren Rand (8b, 8'b) des Fensterhalterungsteils, die dazu bestimmt ist, mit dem Umfang einer Scheibe (6) abgedeckt zu werden, der dicht mit dem äußeren Rand (8b, 8'b) verbunden ist, **dadurch gekennzeichnet, dass** er auf seiner Stützfläche für die Scheibe eine Aussparung (15, 17) umfasst, um eine Lichtquelle aufzunehmen.

2. Fensterhalterungsteil nach Anspruch 1, **dadurch gekennzeichnet, dass** er mit einer verstärkten Struktur (9) versehen ist, die ihn versteifen soll.

3. Fensterhalterungsteil nach einem der Ansprüche 1 und 2, **dadurch gekennzeichnet, dass** eine Längsstützplatte (11, 20), die dazu bestimmt ist, in dem Ständer angeordnet zu werden, Leuchtdioden (12) trägt, die die Lichtquelle bilden.

4. Fensterhalterungsteil nach Anspruch 3, **dadurch gekennzeichnet, dass** der Ständer mit einem inneren Netz von Rippen (9) versehen ist, das Ausschnitte für die Aufnahme der Stützplatte umfasst.

5. Fensterhalterungsteil nach Anspruch 3, **dadurch gekennzeichnet, dass** der Ständer in seinen Teilen, die für die Lichtquelle (12) vorgesehen sind, eine Lagerung (17) umfasst, die vom Inneren des Fahrzeugs zugänglich ist, wobei diese Lagerung einen Boden (18) umfasst, der mit Öffnungen (19) versehen ist, die derart positioniert sind, dass sie mit den Leuchtdioden (12) zusammenfallen, die von der Stützplatte (20) getragen werden, die in Form eines Deckels ausgeführt ist, der die Lagerung (17) verschließen kann.

6. Fensterhalterungsteil nach Anspruch 5, **dadurch gekennzeichnet, dass** die Stützplatte (20) elastische Klammern (21) umfasst, die ihr Einrasten in der Lagerung sicher stellen, wobei diese Klammern als elektrische Anschlüsse (22) für die Stromversorgung der Leuchtdioden durch Kupplung mit einer in der Lagerung vorgesehenen leitenden Basis (23) dienen.

7. Fensterhalterungsteil nach einem der Ansprüche 1 und 2, **dadurch gekennzeichnet, dass** er eine Lagerung (28) umfasst, die zum Äußeren des Fahrzeugs, d.h. scheibenseitig, und zum Inneren des Fahrzeugs offen ist, wobei diese Lagerung (28) derart angeordnet ist, dass sie die Lichtquelle aufnimmt, damit diese das Licht aus der Lagerung zum Äußeren und zum Inneren des Fahrzeugs entsenden kann.

8. Fensterhalterungsteil nach Anspruch 7, **dadurch gekennzeichnet, dass** die Lagerung zum Inneren des Fahrzeugs durch eine durchscheinende oder durchsichtige Wand (31), die eventuell mit einem Filter versehen ist, der die Diffusion des von der Lichtquelle entsendeten Lichts zum Inneren des Fahrzeugs sicher stellt, verschlossen ist.

9. Fensterhalterungsteil nach einem der Ansprüche 7 und 8, **dadurch gekennzeichnet, dass** die Lagerung einen beweglichen Reflektor (32) enthält, der eine erste Position, in der er die von der Lichtquelle (26) zum Äußeren des Fahrzeugs gesendeten Lichtstrahlen durch die Scheibe (6) zurücksendet, und eine zweite Position einnehmen kann, in der er die Lichtstrahlen zum Inneren des Karosseriegehäuses zurücksendet.

10. Fenster eines Kraftfahrzeugs, **dadurch gekennzeichnet, dass** es einen Fensterhalterungsteil nach einem der Ansprüche 1 bis 9 umfasst.

11. Heckklappe eines Kraftfahrzeugs, **dadurch gekennzeichnet, dass** sie einen Fensterhalterungsteil nach Anspruch 9 umfasst, wobei der Reflektor (32) seine erste Position einnimmt, wenn die Heckklappe geschlossen ist, und seine zweite Position einnimmt, wenn die Heckklappe offen ist, wobei die Verschiebung des beweglichen Reflektors zwischen seinen beiden Positionen durch das Öffnen und Schließen der Heckklappe hervorgerufen wird.

## Claims

1. Framing for a window of a motor vehicle passenger compartment, the framing including a support face between an inside edge (8a, 8' a) and an outside edge (8b, 8'b) of the framing for being covered by the periphery of a window (6) that is connected in sealed manner to said outside edge (8b, 8' b), the framing being **characterized in that** it includes an arrangement (15, 17) on its window-supporting face for receiving a light source.

2. Framing according to claim 1, **characterized in that** it is provided with a reinforced structure (9) for stiffening it.

3. Framing according to claim 1 or claim 2, **characterized in that** a longitudinal support plate (11, 20) for being received in the upright supports light-emitting diodes (12) constituting the light source.

4. Framing according to claim 3, **characterized in that** the upright is provided with an internal array of ribs (9) including cutouts for receiving the support plate.

5. Framing according to claim 3, **characterized in that**, in its portions provided for the light source (12), the upright includes a housing (17) that is accessible from inside the vehicle, said housing having a far wall (18) provided with openings (19) positioned in such a manner as to coincide with the LEDs (12) carried by the support plate (20), which plate constitutes a cover suitable for closing the housing (17).

6. Framing according to claim 5, **characterized in that** the support plate (20) has resilient lugs (21) enabling it to be snap-fastened in the housing, the lugs acting as electrical connectors (22) for feeding current to the LEDs by coupling with a conductive base member (23) provided in the housing.

7. Framing according to claim 1 or claim 2, **characterized in that** it includes a housing (28) that is open both towards the outside of the vehicle, i.e. towards the window side, and towards the inside of the vehicle, this housing (28) being arranged to receive the light source in such a manner as to enable it to emit light out from the housing both towards the outside and towards the inside of the vehicle.

8. Framing according to claim 7, **characterized in that** the housing is closed, towards the inside of the vehicle, by a wall (31) that is translucent or transparent, and possibly provided with a filter, so as to diffuse the light emitted by the light source towards the inside of the vehicle.

9. Framing according to claim 7 or claim 8, **characterized in that** the housing contains a moving reflector (32) capable of taking up a first position in which it sends light rays emitted by the light source (26) towards the outside of the vehicle through the window (6), and a second position in which it sends the light rays towards the inside of the passenger compartment.

10. A motor vehicle door, **characterized in that** it includes framing according to any one of claims 1 to 9.

11. A motor vehicle tailgate, **characterized in that** it includes framing according to claim 9, the reflector (32) taking up its first position when the tailgate is closed and its second position when the tailgate is open, the moving reflector being moved between its two positions by opening and closing the tailgate.
